(19) Europäisches Patentamt
European Patent Office
Office européen des brevets

(11) **EP 4 379 852 A1**

(12) **EUROPEAN PATENT APPLICATION**

(43) Date of publication:
**05.06.2024 Bulletin 2024/23**

(21) Application number: **23212803.3**

(22) Date of filing: **28.11.2023**

(51) International Patent Classification (IPC):
*H01M 4/134* (2010.01)     *H01M 4/1395* (2010.01)
*H01M 4/36* (2006.01)     *H01M 4/38* (2006.01)
*H01M 4/587* (2010.01)     *H01M 4/62* (2006.01)

(52) Cooperative Patent Classification (CPC):
**H01M 4/366; H01M 4/134; H01M 4/1395;**
**H01M 4/386; H01M 4/587; H01M 4/622;**
**H01M 4/625;** H01M 10/0525; H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.11.2022 KR 20220163040**

(71) Applicant: **Hansol Chemical Co., Ltd**
**Seoul 06169 (KR)**

(72) Inventors:
• **KANG, SUNGHWAN**
**55321 Wanju-gun (KR)**

• **SHIM, HYEONWOO**
**55321 Wanju-gun (KR)**
• **PARK, BYUNGHOON**
**55321 Wanju-gun (KR)**
• **GONG, MINKYUNG**
**55321 Wanju-gun (KR)**
• **KWON, SEMAN**
**55321 Wanju-gun (KR)**

(74) Representative: **Script IP Limited**
**Suite J, Anchor House**
**School Close**
**Chandlers Ford**
**Eastleigh, Hampshire SO53 4DY (GB)**

(54) **ANODE ACTIVE MATERIAL, METHOD OF PREPARING THE SAME, AND LITHIUM SECONDARY BATTERY INCLUDING THE SAME**

(57)     Provided are an anode active material including a core portion that is porous spherical particles including metal particles and carbon, and a shell portion including one or more of crystalline carbon and amorphous carbon, in which the metal particles of the core portion are connected to each other through the carbon, and a coating layer including a polymer is provided on an outer surface of the shell portion, a method of preparing the same, and a lithium secondary battery including the same.

FIG. 1

EP 4 379 852 A1

**Description**

CROSS-REFERENCE TO RELATED APPLICATION

This application claims the benefit of Korean Patent Application No. 10-2022-0163040 filed on November 29, 2022, in the Korean Intellectual Property Office, the entire disclosure of which is incorporated herein by reference for all purposes.

BACKGROUND

1. Field of the Invention

One or more embodiments relate to an anode active material, a method of preparing the same, and a lithium secondary battery including the same.

2. Description of the Related Art

As lithium ion batteries (LIBs) have a high energy density and are easy to design, the LIBs are being used as a main power source for mobile electronic devices and their application range will expand further in the future to the fields of electric vehicles, power storage devices of renewable energy, and the like.
In order to apply the LIBs to new applications, research on LIB materials having characteristics such as a higher energy density and longer life is continuously required. In particular, research has been conducted on various materials such as carbon, silicon, tin, germanium, and the like for anode materials.
Among them, silicon-based anode materials have received a lot of attention as next-generation anode materials, since the silicon-based anode materials have a very high theoretical capacity compared to currently commercialized graphite anode materials. However, the silicon-based anode materials are difficult to develop and commercialize due to a large volume change occurring during a battery charging and discharging process. Silicon changes in volume by 300% or more during charging and discharging, which may cause electrical short circuit of particles in an electrode plate, increase resistance, and generate cracks on the silicon itself, resulting in continuous irreversible reactions with an electrolyte.
Therefore, in order to improve the problems caused by the expansion described above, the development is being conducted in the related industry in a way of introducing a buffer layer or a clamping layer, and coating carbon or ceramic-based materials or the like to limit contact with the electrolyte.

SUMMARY

The present disclosure is made in view of the aforementioned problems regarding the degradation of a life and output occurring due to a volume change during charging and discharging of a silicon-based anode material. The present disclosure is provided to reduce a volume expansion stress of anode particles repeatedly generated during a charging and discharging process by coating a polymer on a surface of an anode active material having great volume expansion, as an anode active material that is coated with a polymer in advance, and increasing a distribution of the polymer selectively in anode active material particles requiring relatively high bonding strength, and to suppress particle degradation by blocking direct contact between the anode active material and an electrolyte by the polymer coated on the particle surface. The present disclosure also provides an anode active material for a secondary battery having long life characteristics with a stable charge/discharge behavior even after long-term use while having a high capacity and high energy density, and a lithium secondary battery including the same.
However, goals to be achieved are not limited to those described above, and other goals not mentioned above are clearly understood by one of ordinary skill in the art from the following description.
According to an aspect, there is provided an anode active material for a lithium secondary battery having a core-shell structure, in which a core portion is porous spherical particles including metal particles and carbon, a shell portion includes one or more of crystalline carbon and amorphous carbon, the metal particles of the core portion are connected to each other through the carbon, and a coating layer including a polymer is provided on an outer surface of the shell portion.
According to another aspect, there is provided a method of preparing the anode active material for the lithium secondary battery according to an embodiment of the present disclosure, the method including step S 1 of dispersing metal particles and amorphous carbon in a solvent, step S2 of preparing a spherical precursor by spray-drying the dispersed solution, step S3 of mixing and compounding the spherical precursor, an amorphous carbon precursor, and crystalline carbon, step S4 of obtaining a core-shell powder by performing a heat treatment on the compounded particles at 800°C to 1 100°C, and step S5 of coating particles of the core-shell powder with a polymer.

According to still another aspect, there is provided a lithium secondary battery including an anode, a cathode, and an electrolyte, in which the anode includes the anode active material according to an embodiment of the present disclosure.

Additional aspects of embodiments will be set forth in part in the description which follows and, in part, will be apparent from the description, or may be learned by practice of the disclosure.

An anode active material according to an embodiment of the present disclosure may ensure structural stability of a core portion together with a function of an electrical transmission path, as all silicon primary particles are connected to each other through amorphous carbon ensured in the core portion. Thus, it is possible to provide an anode active material with an electrical conduction path of silicon maintained even during continuous charging/discharging and enable a stable electrochemical reaction to exhibit improved life (long life) characteristics.

It is also possible to improve the problems regarding the degradation of life and output characteristics due to volume expansion and exhibit an effect of reducing an expansion rate of an electrode plate according to the charging and discharging, by coating a polymer (binder) on an anode active material occupying the most parts of a composition of an electrode plate in advance and selectively strengthening polymer bonding on the anode active material having great volume expansion at the time of forming the electrode plate, and it is possible to suppress the formation of solid electrolyte interphase (SEI) by limiting the direct contact between the anode active material and an electrolyte, thereby minimizing the consumption of the electrolyte and improving the life characteristics.

It should be understood that the effects of the present disclosure are not limited to the above-described effects, but are construed as including all effects that can be inferred from the configurations and features described in the following description or claims of the present disclosure.

BRIEF DESCRIPTION OF THE DRAWINGS

These and/or other aspects, features, and advantages of the invention will become apparent and more readily appreciated from the following description of embodiments, taken in conjunction with the accompanying drawings of which:

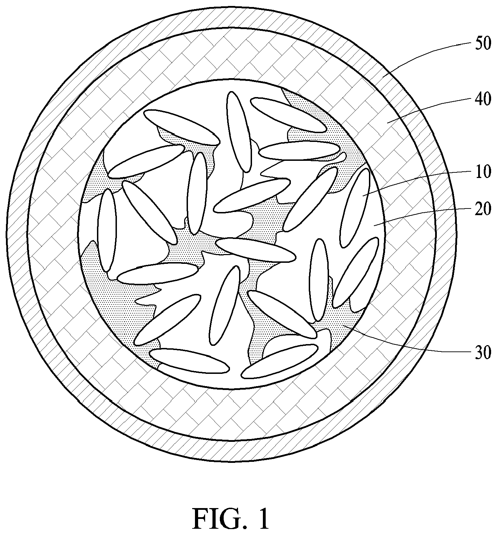

FIG. 1 is a schematic diagram illustrating an anode active material according to an embodiment;

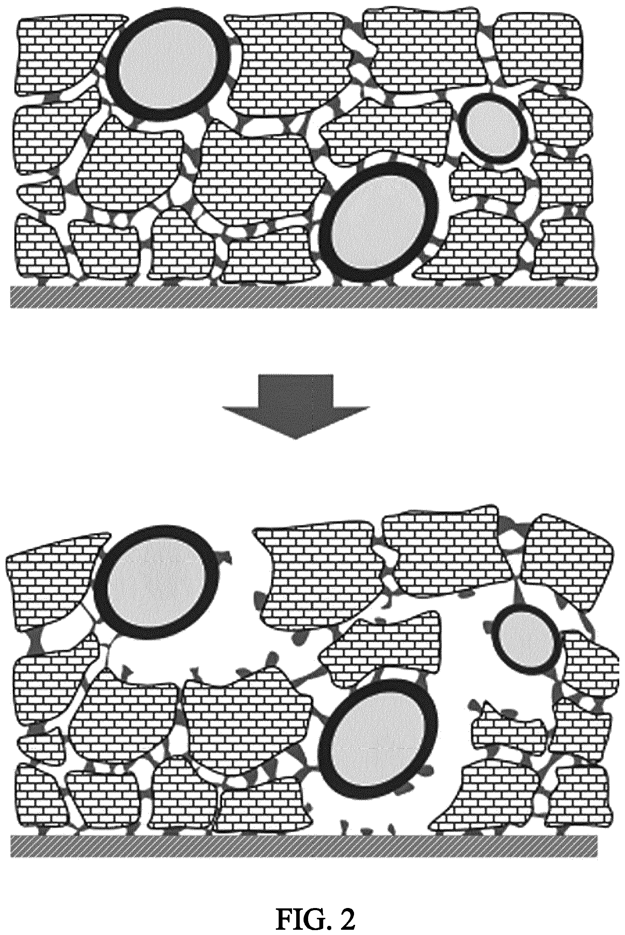

FIG. 2 is a diagram illustrating a phenomenon that an anode active material is not bonded to an electrode plate and falls out due to repeated charging and discharging; and

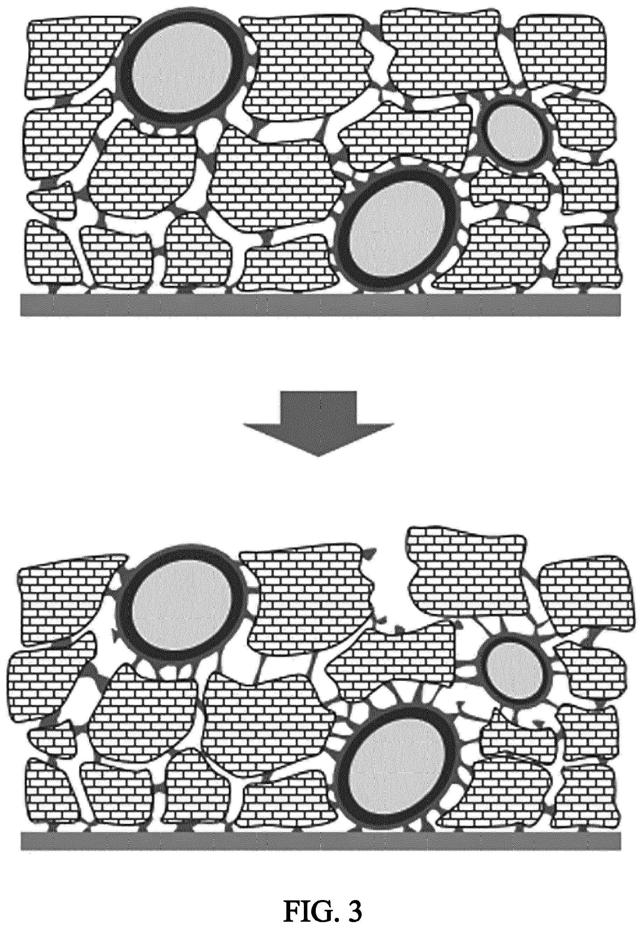

FIG. 3 is a diagram illustrating an anode active material having selectively strengthened polymer bonding on an electrode plate according to an embodiment.

DETAILED DESCRIPTION

Hereinafter, embodiments will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure.

According to an aspect of the present disclosure, there is provided an anode active material for a lithium secondary battery having a core-shell structure, in which a core portion is porous spherical particles including metal particles and carbon, a shell portion includes one or more of crystalline carbon and amorphous carbon, the metal particles of the core portion are connected to each other through the carbon, and a coating layer including a polymer is provided on an outer surface of the shell portion.

The metal particles included in the core portion of the anode active material may include one or more selected from a group consisting of Si, Ge, Sn, and an oxide thereof, and may desirably include flake-shaped silicon (Si) particles from a viewpoint of improving an energy density and a maximum capacity of the anode active material. In addition, in order to suppress a volume change according to the charging and discharging, the metal particles may be desirably nanoparticles having a size of 1000 nm or less, more desirably 50 nm to 150 nm, and even more desirably 80 nm to 100 nm based on Dv50 (laser diffraction).

When an average particle size of the metal nanoparticles exceeds 1000nm, an effect of suppressing the volume change decreases, and an effect of reducing the battery life may be seen. When the average particle size thereof is less than 50 nm, the manufacturing cost may increase, and the battery capacity and efficiency may be lowered.

The metal particles included in the core portion of the anode active material according to an embodiment of the present disclosure may be dispersed in the core portion without coming into direct contact with each other, and the dispersed metal particles may be physically connected to each other through a carbon material included in the core portion. Through this, contact resistance between particles during the movement of electrons may be reduced, and as a result, electrical conductivity may be improved, thereby obtaining excellent output characteristics or a charging speed.

In addition, the bonding between silicon particles may be strengthened so that an electrical conduction path of metal particles may be maintained and a stable electrochemical reaction may be caused even during continuous charging/discharging of the lithium secondary battery, resulting in improved life characteristics (long life).

Meanwhile, it is desirable that the carbon material included in the core portion includes amorphous carbon.

Specifically, the amorphous carbon may be derived from one or more selected from a group consisting of sucrose, a phenol resin, a naphthalene resin, a polyvinyl alcohol resin, a furfuryl alcohol resin, a furan resin, a cellulose resin, a styrene resin, a polyimide resin, an epoxy resin, a vinyl chloride resin, coal-based pitch, petroleum-based pitch, polyvinyl chloride, stearic acid, mesophase pitch, tar, a block copolymer, a polyol, and low-molecular-weight heavy oil, may correspond, more specifically, to coal-based pitch, petroleum-based pitch, and an acrylic resin, but is not limited thereto. Meanwhile, pitch having a softening point of 100°C to 250°C may be used for the pitch.

The core of the porous spherical particles may have a porosity of about 20% to 50% and more specifically 20% to 30%. When the porosity is less than 20%, the destruction of a composite may occur due to the expansion of silicon particles, which may cause degradation of the life characteristics. When the porosity exceeds 50%, a contact interface with an electrolyte may increase, which may cause a decrease in initial efficiency and degradation of the life characteristics.

The anode active material according to an embodiment of the present disclosure may include, as the shell portion, one or more of crystalline carbon and amorphous carbon. A desirable example of the crystalline carbon may be graphite-based carbon, and may include, more specifically, natural graphite, artificial graphite, expanded graphite, and the like.

The natural graphite is naturally produced graphite, and examples thereof may include flake graphite, high crystalline graphite, and the like. The artificial graphite is artificially synthesized graphite and is produced by heating amorphous carbon at a high temperature, and examples thereof may include primary graphite, electrographite, secondary graphite, graphite fibers, and the like.

In addition, the expanded graphite may be obtained by intercalating a chemical such as an acid or alkali between layers of graphite and heating it to inflate vertical layers of a molecular structure.

In addition, a desirable example of the amorphous carbon may be considered to be substantially the same as the type of amorphous carbon in the core portion described above, and the shell portion may further include silicon nanoparticles in addition to the crystalline carbon and/or amorphous carbon listed above.

Meanwhile, the anode active material according to an embodiment of the present disclosure may include a coating layer including a polymer on an outer surface of the shell portion, and the coating layer may have a thickness of 5 nm to 5 μm, desirably 10 nm to 1000 nm, and more desirably 20 nm to 200 nm.

When the thickness of a polymer layer (the coating layer) is less than the lower limit, the expansion characteristics and output characteristics of an anode plate prepared using it may be slightly degraded, and an SEI layer may be formed according to charge/discharge, or electrolyte consumption may occur. On the other hand, when the thickness of the polymer layer exceeds the upper limit, the resistance of the anode plate may increase due to the thickly coated polymer layer, resulting in a problem that the output characteristics are greatly reduced.

Examples of the type of a material for forming the polymer layer coated on the outer surface of the shell portion may include one or more selected from a group consisting of polyvinylidene fluoride (PVDF), polyacrylic acid (PAA), carboxymethylcellulose (CMC), styrene-butadiene rubber (SBR), nitrile-butadiene rubber (NBR), a styrene-butadiene-styrene block copolymer (SBS), polyvinyl alcohol (PVA), polytetrafluoroethylene (PTFE), polyethylene oxide (PEO), polyvinylpyrrolidone (PVP), a polyacrylate ester copolymer, chlorinated polyethylene, polymethacrylate ester, an ethylene-vinyl alcohol copolymer, polyimide, polyamide, polyamide imide, polymethyl methacrylate (PMMA), natural rubber (NR), isoprene rubber (IR), and an ethylene-propylene-diene ternary copolymer (EPDM), but is not limited thereto.

Meanwhile, the anode active material according to an embodiment of the present disclosure may have an average particle size of 3 μm to 10 μm, and desirably 5 μm to 8 μm.

According to an aspect of the present disclosure, there is provided a method of preparing an anode active material for a lithium secondary battery, the method including step S 1 of dispersing metal particles and amorphous carbon in a solvent, step S2 of preparing a spherical precursor by spray-drying the dispersed solution, step S3 of mixing and compounding the spherical precursor, an amorphous carbon precursor, and crystalline carbon, step S4 of obtaining a core-shell powder by performing a heat treatment on the compounded particles at 800°C to 1100°C, and step S5 of coating particles of the core-shell powder with a polymer.

The metal particles and the amorphous carbon in step S1 are substantially the same as the metal particles and the amorphous carbon described above in detail, and the solvent may be a solvent including one or more selected from a group consisting of methanol, ethanol, propanol, and butanol, and may be desirably a solvent including isopropyl alcohol (IPA).

In step S2, a drying temperature may be, for example, 80°C to 150°C.

In addition, the crystalline carbon used in step S3 may correspond to graphite-based carbon, and may include, more specifically, natural graphite, artificial graphite, expanded graphite, and the like.

The compounding of step S3 may be performed, for example, using a compounding machine manufactured by Hansol Chemical, and may be performed, for example, under conditions of atmosphere or an inert atmosphere at a reaction temperature of 40°C to 250°C for 1 minute to 24 hours.

In addition, the heat treatment of step S4 may be performed at a temperature of 800°C to 1100°C for about 5 minutes to 6 hours, but is not limited to.

In a method of coating the polymer in step S5, the polymer may include one or more selected from a group consisting of PVDF, PAA, CMC, and SBR, and a polymer layer formed through this may have a thickness of about 10 nm to 200 nm.

According to an aspect of the present disclosure, there is provided a lithium secondary battery including an anode, a cathode, and an electrolyte, in which the anode includes the anode active material according to an embodiment of the present disclosure.

In addition to the anode active material described above, the anode may further include an anode active material generally used as the anode active material for a lithium battery in the related technical field. Materials of the commonly used anode active material may include, for example, one or more selected from a group consisting of a lithium metal, metal alloyable with lithium, transition metal oxide, non-transition metal oxide, and a carbon-based material.

The cathode may include a cathode active material, the type of the cathode active material may correspond to a lithium-containing metal oxide, and it is applicable to the lithium secondary battery of the present disclosure as long as it is commonly used in the related technical field.

The electrolyte may include a non-aqueous electrolyte containing a lithium salt, and specifically, a non-aqueous electrolyte, a solid electrolyte, an inorganic solid electrolyte, or the like may be used.

In addition, a separator such as a glass fiber, polyester, Teflon, polyethylene, polypropylene, or PTFE may be additionally may be disposed between the cathode and the anode in the lithium secondary battery.

Hereinafter, the configuration of the present disclosure and effects thereof will be described in more detail through examples and comparative examples. However, the examples are merely intended for the purpose of describing the disclosure in more detail, and thus, the scope of the disclosure is not limited to the examples.

Examples

(1) Preparation Examples

(a) Comparative Example 1

i) Preparation of silicon anode active material

Silicon (D50 = 109 nm) and an acrylic polymer (manufactured by Hansol Chemical, Mw = 10,000) were dispersed in an IPA solution at a weight ratio of 80:20, and then, a silicon precursor having Dv50 of 7.5 μm was prepared using a spray dryer (GEA, Mobile minor). The silicon precursor, petroleum-based pitch, and graphite were put into a coating machine manufactured by Hansol Chemical at a ratio of 5:4:1 for a coating process for 20 minutes, and obtained particles were subjected to a heat treatment at 930°C to obtain a core-shell powder. The core-shell powder was classified using a 400-mesh sieve.

ii) Preparation of anode plate

9.0 weight% of the prepared silicon anode active material, 84.0 weight% of natural graphite, 3.0 weight% of a carbon fiber conductive material, 2.0 weight% of carboxymethylcellulose, and 2.0 weight% of a styrene-butadiene rubber binder were mixed in a pure solvent to prepare an anode active material slurry, and this slurry was coated on a Cu-foil current collector, dried, and pressed at a mixture density of 1.55 g/cc to prepare an anode.

iii) Preparation of cathode plate

96 weight% of an NCM cathode active material, 2 weight% of an acetylene black conductive material, and 2 weight% of a polyvinylidene fluoride binder were mixed in an N-methyl pyrrolidone solvent to prepare a cathode active material, and this slurry was coated on an Al-foil current collector, dried, and pressed to prepare a cathode.

iv) Preparation of cell

The evaluation of the characteristics of the prepared silicon anode active material was carried out with a CR2032 coin cell. Electrode plates obtained by cutting the prepared anode plate and cathode plate into circles of 16 mm and 14 mm, respectively, and a separator of 18 mm were used. At this time, a capacity ratio per unit area of the cathode and anode, N/P, was 1.1. A cell was configured using an electrolyte obtained by adding FEC 5% to a mixed solvent (EC:DEC = 3:7) of ethylene carbonate and diethyl carbonate in which 1.0M $LiPF_6$ was dissolved.

(b) Comparative Example 2

An anode plate was prepared in the same manner as in Comparative Example 1 except that 3.0 weight% of the carbon fiber conductive material was additionally mixed with a slurry obtained by mixing 9.0 weight% of the prepared anode active material, 84.0 weight% of natural graphite, 2.0 weight% of carboxymethylcellulose, and 2.0 weight% of the styrene-butadiene rubber binder in a pure solvent in the preparation of the anode plate of Comparative Example 1.

(c) Comparative Example 3

An anode plate was prepared in the same manner as in Comparative Example 1 except that a slurry obtained by mixing 9.0 weight% of the prepared anode active material, 2.0 weight% of carboxymethylcellulose, and 2.0 weight% of the styrene-butadiene rubber binder in a pure solvent was prepared, 84.0 weight% of natural graphite was additionally mixed therewith, and 3.0 weight% of the carbon fiber conductive material was additionally mixed therewith in the preparation of the anode plate of Comparative Example 1.

(d) Example 1

An anode plate was prepared in the same manner as in Comparative Example 3 except that 100 weight% of the core-shell powder obtained in the coating process in the preparation of the anode active material of Comparative Example 3 and 1.5 weight% of carboxymethylcellulose were put into a coating machine manufactured by Hansol Chemical for coating for 2 minutes, and the anode active material slurry was prepared by mixing 9.0 weight% of the silicon anode active material, 84.1 weight% of natural graphite, 3.0 weight% of the carbon fiber conductive material, 1.9 weight% of carboxymethylcellulose, and 2.0 weight% of the styrene-butadiene rubber binder in the pure solvent in the process of preparing the anode plate.

(e) Example 2

An anode active material was prepared in the same manner as in Comparative Example 3 except that 100 weight% of the core-shell powder obtained in the coating process in the preparation of the anode active material of Comparative Example 3 and 5.0 weight% of carboxymethylcellulose were put into a coating machine manufactured by Hansol Chemical for coating for 2 minutes, and the anode active material slurry was prepared by mixing 9.0 weight% of the silicon anode active material, 84.4 weight% of natural graphite, 3.0 weight% of the carbon fiber conductive material, 1.6 weight% of carboxymethylcellulose, and 2.0 weight% of the styrene-butadiene rubber binder in the pure solvent in the process of preparing the anode plate.

(f) Example 3

An anode active material was prepared in the same manner as in Comparative Example 3 except that 100 weight% of the core-shell powder obtained in the coating process in the preparation of the anode active material of Comparative Example 3 and 10.0 weight% of carboxymethylcellulose were put into a coating machine manufactured by Hansol Chemical for coating for 2 minutes, and the anode active material slurry was prepared by mixing 9.1 weight% of the silicon anode active material, 84.8 weight% of natural graphite, 3.0 weight% of the carbon fiber conductive material, 1.1 weight% of carboxymethylcellulose, and 2.0 weight% of the styrene-butadiene rubber binder in the pure solvent in the process of preparing the anode plate.

(g) Example 4

An anode active material was prepared in the same manner as in Comparative Example 3 except that 100 weight% of the core-shell powder obtained in the coating process in the preparation of the anode active material of Comparative Example 3 and 20.0 weight% of carboxymethylcellulose were put into a coating machine manufactured by Hansol Chemical for coating for 2 minutes, and the anode active material slurry was prepared by mixing 9.2 weight% of the silicon anode active material, 85.5 weight% of natural graphite, 3.1 weight% of the carbon fiber conductive material, 0.2 weight% of carboxymethylcellulose, and 2.0 weight% of the styrene-butadiene rubber binder in the pure solvent in the process of preparing the anode plate.

(h) Comparative Example 4

An anode active material was prepared in the same manner as in Example 2 except that the acrylic polymer was replaced with an organic fatty acid.

(i) Comparative Example 5

An anode active material was prepared in the same manner as in Example 2 except that silicon and an organic fatty acid were dispersed in an IPA solution at a weight ratio of 80:20, carbon nanotubes, a content of which is 5% of silicon in terms of parts by weight, were put into the dispersed solution, and this was spray-dried.

(2) Experimental example - Evaluation method

a) Coin half cell

A coin half cell prepared using the anode active material prepared in each of Examples 1 to 4 and Comparative Examples 1 to 5 according to the present disclosure was charged with a constant current of 0.1 C rate at 25°C until a voltage reached 0.01 V(vs. Li), and charged at a constant voltage until the current reached 0.05 C while maintaining 0.01 V After resting the charged cell for 10 minutes, the cell was discharged with a constant current of 0.1 C until the voltage reached 1.5 V (vs. Li) during discharging (performed two times, initial formation).
Meanwhile, "C" is a discharge speed of a cell, which refers to a value obtained by dividing a total capacity of the cell by a total discharging time.
An initial charge capacity and an initial discharge capacity are the charge and discharge capacity in a first cycle, which are calculated by the following equation.

$$\underline{\text{Initial efficiency [\%] = (first cycle discharge capacity/first cycle charge capacity)} \times}$$

$$\underline{100}$$

b) Coin full cell

The coin full cell prepared using the anode active material prepared in each of Examples 1 to 4 and Comparative Examples 1 to 5 was charged with a constant current of 0.1 C rate at 25°C until a voltage reached 4.2 V, and was charged at a constant voltage until the current reached 0.05 C while maintaining 4.2 V After resting the charged cell for 10 minutes, the cell was discharged with a constant current of 0.1 C until the voltage reached 2.7 V during discharging (performed two times, initial formation).
Then, the cell was charged with a constant current of 1.0 C rate at 25°C until the voltage reached 4.2 V, and was charged at a constant voltage until the current reached 0.05 C while maintaining 4.2 V After resting the charged coin cell for 10 minutes, the cycle of performing the discharge with a constant current of 1.0 C until the voltage reached 2.7 V during discharging was repeated (first to 100th cycles).

The capacity retention rate characteristics were calculated by the following equation.

$$\text{Capacity retention rate} = \frac{\text{Discharge capacity of 1C, 100 times}}{\text{Discharge capacity of 1C, one time}} \times 100\%$$

The measured output characteristics of the cell using the anode active material prepared in each of Examples 1 to 4 and Comparative Examples 1 to 5 were calculated by the following equation.

$$\text{Output characteristics [\%]} = (\text{discharge capacity with 1.0 C/discharge capacity with 0.1 C}) \times 100$$

c) Measurement of expansion rate of electrode plate

After charging and discharging the CR2032 coin cell with 1 C 100 times, the cell was disassembled to measure a thickness of the anode. It was compared with a thickness of an anode plate before performing the charging and discharging, and an expansion rate was measured by the following equation.

$$\text{Expansion rate} = \frac{\text{Thickness of anode plate after charging and discharging 100 times} - \text{Thickness of current collector}}{\text{Thickness of anode plate before charging and discharging} - \text{Thickness of current collector}} \times 100\%$$

d) Measurement of bonding force of electrode plate

In order to measure a bonding force of an electrode plate, a copper current collector of the prepared anode plate and an anode electrode layer formed on the copper current collector were peeled off at 180° and the bonding force was measured.

e) Measurement of polymer coating layer thickness

A cross section of the prepared silicon anode active material was cut using focused ion beam (FIB) equipment, and a distance between an outer layer of a shell portion of carbon and a polymer coating layer was measured by scanning electron microscope (SEM).

f) Calorific characteristics (measurement of cumulative specific calorie)

Differential scanning calorimetry was used for quantitative analysis of SEI. The coin half cell that was charged once was disassembled to separate an anode, the temperature was increased from RT(20°C) to 150°C at a rate of temperature increase of 5°C, and the cumulative specific calorie was measured from 80°C to 150°C.

Results of the above experiments are summarized in Tables 1 and 2 below.

[Table 1]

|  | Comparative Example 1 | Comparative Example 2 | Comparative Example 3 |
|---|---|---|---|
| Capacity retention rate (%) | 85.0 | 85.6 | 87.9 |
| Electrode plate bonding force (gf/cm) | 8.2 | 7.2 | 6.7 |
| Electrode plate expansion rate (%) | 40 | 38 | 35 |

Comparative Examples 1 to 3 of Table 1 show results of the evaluation of the anode plates prepared by different methods using the silicon anode active material that is not coated with a polymer. Comparative Example 1 shows a case of an electrode plate prepared by mixing the silicon anode active material, graphite, and the conductive material with the binder and the solvent at once, Comparative Example 2 shows a case of an electrode plate prepared by mixing the silicon anode active material and graphite first with the conductive material and the solvent, and then additionally mixing the conductive material, and Comparative Example 3 shows a case of an electrode plate prepared by mixing only the silicon anode active material with the binder and the solvent, and then additionally mixing graphite and the conductive material. For reference, all of Comparative Examples 1 to 3 had the same ratios and weights of the materials used.

As a result, as shown in Table 1, in Comparative Example 1, the binder bonds the silicon active material and the graphite, and the conductive material to each other evenly, and therefore, it is found that a high electrode plate bonding force is obtained, but the bonding force is insufficient to suppress the expansion of the silicon anode active material, resulting in low expansion characteristics, compared to Comparative Examples 2 and 3. On the other hand, in Comparative Example 3, the electrode plate is prepared by concentrating the binder distribution only in the silicon anode active material, and therefore, it is found that the electrode plate expansion characteristics are improved under the influence of the binder concentrated in the silicon anode active material while having a low electrode plate bonding force, compared to Comparative Examples 1 and 2.

In addition, Comparative Example 3 in which the binder is concentrated on the silicon anode active material showed the most excellent life characteristics, and therefore, it is found that the concentrating the binder in the anode active material having great volume expansion is effective in improving the life characteristics, rather than providing the binder in the electrode plate evenly.

[Table 2]

| | Comparative Example 3 | Comparative Example 4 | Comparative Example 5 | Example 1 | Example 2 | Example 3 | Example 4 |
|---|---|---|---|---|---|---|---|
| Specific capacity (mAh/g) | 1412 | 1401 | 1380 | 1418 | 1413 | 1415 | 1416 |
| Initial efficiency (%) | 88.8 | 87.3 | 85.1 | 88.6 | 88.7 | 88.5 | 88.2 |
| Thickness of coating layer (nm) | - | 50 | 46 | 14 | 47 | 98 | 212 |
| Capacity retention rate (%) | 87.9 | 86.2 | 83.4 | 88.1 | 88.5 | 88.9 | 89.1 |
| Electrode plate expansion rate (%) | 35 | 33 | 32 | 36 | 32 | 30 | 29 |
| Output(%) | 87.0 | 86.9 | 84.3 | 87.2 | 88.2 | 88.5 | 80.4 |
| Cumulative specific calorie (J/g) | 193.6 | 175.8 | 258.9 | 183.2 | 132.0 | 122.9 | 118.7 |

Table 2 showed that, in Example 1 with the coating layer having a thin thickness, the capacity retention rate and the electrode plate expansion rate were slightly improved compared to Comparative Example 3, however, in Example 3 with the coating layer of 98 nm, the most balanced performance improvement degree was obtained among the above examples. In a case of Example 4, since the binder coating layer is thick, the expansion characteristics and the life characteristics are excellent, however, the output characteristics were reduced, which may be interpreted as a result of increased electrode plate resistance due to the thickly coated polymer. From these results, it is thought that a significant difference in performance occurs between Comparative Example 3 in which the binder is simply mixed in the electrode preparation process to strengthen the bonding force and Examples 1 to 3 in which the polymer is coated on the particle itself, and it is found that there is a range of a polymer coating layer of an appropriate thickness.

In addition, in Comparative Example 3 without the polymer coating layer, it is found that a large amount of SEI is formed as it shows a high cumulative calorific value, compared to Examples 1 to 4. In Examples 1 to 4 with the silicon anode active material in which the polymer coating layer is formed, it is found that the SEI cumulative calorific value is reduced as the thickness of the coating layer is thick. This is interpreted as a result of the polymer coated on the surface of the silicon-based anode active material blocking contact with the electrolyte and thus inhibiting the formation of SEI.

Also, in Comparative Example 4 which does not include the amorphous carbon in the core portion, and Comparative Example 5 including CNT in the core portion, it is found that the capacity retention rate and the output characteristics are reduced and a higher cumulative calorific value is obtained, compared to Example 2 with a similar polymer thickness layer.

Through this, it is found that, in Examples 2 and 3 including the polymer coating layer having a specific thickness while including the amorphous carbon in the core portion, more excellent results are obtained in terms of initial efficiency of a battery, the capacity retention rate, the electrode plate expansion rate, the output, and the cumulative specific calorie.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and equivalents to the claims are also within the scope of the following claims.

EXPLANATION OF REFERENCE NUMERALS

 10: Silicon particle
 20: Pore of core portion
 30: Amorphous carbon
 40: Graphite-based carbon shell layer
 50: Polymer coating layer

**Claims**

1. An anode active material for a lithium secondary battery having a core-shell structure,

 wherein a core portion is porous spherical particles comprising metal particles and carbon,
 wherein a shell portion comprises one or more of crystalline carbon and amorphous carbon,
 wherein the metal particles of the core portion are connected to each other through the carbon, and
 wherein a coating layer comprising a polymer is provided on an outer surface of the shell portion.

2. The anode active material of claim 1, wherein the metal particles comprise one or more selected from a group consisting of Si, Ge, Sn, and oxides thereof.

3. The anode active material of claim 1, wherein the metal particles are flaky metal nanoparticles.

4. The anode active material of claim 1, wherein the metal particles have a size $D_v50$ of 80 nanometers (nm) to 100 nm.

5. The anode active material of claim 1, wherein the metal particles are dispersed in the core portion without coming into direct contact with each other.

6. The anode active material of claim 1, wherein the carbon of the core portion comprises amorphous carbon.

7. The anode active material of claim 1, wherein the amorphous carbon is derived from one or more selected from a group consisting of sucrose, a phenol resin, a naphthalene resin, a polyvinyl alcohol resin, a furfuryl alcohol resin, a furan resin, a cellulose resin, a styrene resin, a polyimide resin, an epoxy resin, a vinyl chloride resin, coal-based pitch, petroleum-based pitch, polyvinyl chloride, stearic acid, mesophase pitch, tar, a block copolymer, a polyol, and low-molecular-weight heavy oil.

8. The anode active material of claim 1, wherein the core portion comprising the porous spherical particles has a porosity of 20% to 50%.

9. The anode active material of claim 1, wherein the crystalline carbon is graphite-based carbon.

10. The anode active material of claim 1, wherein the shell portion further comprises silicon nanoparticles.

11. The anode active material of claim 1, wherein the coating layer has a thickness of 10 nm to 200 nm.

12. The anode active material of claim 1, wherein the polymer included in the coating layer comprises one or more selected from a group consisting of polyvinylidene fluoride (PVDF), polyacrylic acid (PAA), carboxymethylcellulose (CMC), styrene-butadiene rubber (SBR), nitrile-butadiene rubber (NBR), a styrene-butadiene-styrene block copolymer (SBS), polyvinyl alcohol (PVA), polytetrafluoroethylene (PTFE), polyethylene oxide (PEO), polyvinylpyrrolidone (PVP), a polyacrylate ester copolymer, chlorinated polyethylene, polymethacrylate ester, an ethylene-vinyl alcohol copolymer, polyimide, polyamide, polyamide imide, polymethyl methacrylate (PMMA), natural rubber (NR), isoprene rubber (IR), and an ethylene-propylene-diene ternary copolymer (EPDM).

13. A method of preparing the anode active material for the lithium secondary battery of claim 1, the method comprising:

     step S1 of dispersing metal particles and amorphous carbon in a solvent;
     step S2 of preparing a spherical precursor by spray-drying the dispersed solution;
     step S3 of mixing and compounding the spherical precursor, an amorphous carbon precursor, and crystalline carbon;
     step S4 of obtaining a core-shell powder by performing a heat treatment on the compounded particles at 800°C to 1100°C; and
     step S5 of coating particles of the core-shell powder with a polymer.

14. The method of claim 13,

     wherein the metal particles are flaky nanoparticles comprising one or more selected from a group consisting of Si, Ge, Sn, and oxides thereof,
     wherein the amorphous carbon comprises one or more selected from a group consisting of sucrose, a phenol resin, a naphthalene resin, a polyvinyl alcohol resin, a furfuryl alcohol resin, a furan resin, a cellulose resin, a styrene resin, a polyimide resin, an epoxy resin, a vinyl chloride resin, coal-based pitch, petroleum-based pitch, polyvinyl chloride, stearic acid, mesophase pitch, tar, a block copolymer, a polyol, and low-molecular-weight heavy oil,
     wherein the crystalline carbon is graphite-based carbon, and
     wherein the solvent comprises one or more selected from a group consisting of methanol, ethanol, propanol, and butanol.

15. The method of claim 13, wherein step S5 of coating comprises forming a polymer layer having a thickness of 10 nm to 200 nm.

FIG. 1

FIG. 2

FIG. 3

Europäisches
Patentamt
European
Patent Office
Office européen
des brevets

# EUROPEAN SEARCH REPORT

Application Number

EP 23 21 2803

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 964 937 B2 (SAMSUNG ELECTRONICS CO LTD [KR]; SAMSUNG SDI CO LTD [KR]) 30 March 2021 (2021-03-30) | 1-12 | INV. H01M4/134 H01M4/1395 |
| A | * claims 1,25 * <br> * examples 1,2 * | 13-15 | H01M4/36 H01M4/38 H01M4/587 |
| X | CN 115 188 938 A (HIGHPOWER TECH HUIZHOU CO LTD) 14 October 2022 (2022-10-14) * claim 1; figure 1 * | 1,2 | H01M4/62 |
| A | US 2016/164081 A1 (CUI QING-WEI [CN] ET AL) 9 June 2016 (2016-06-09) * paragraphs [0050] - [0057]; claim 1 * | 1-15 | |

TECHNICAL FIELDS
SEARCHED      (IPC)

H01M

The present search report has been drawn up for all claims

| Place of search | Date of completion of the search | Examiner |
|---|---|---|
| Munich | 22 April 2024 | González Junquera, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 2803

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2024

| Patent document cited in search report | | Publication date | Patent family member(s) | | Publication date |
|---|---|---|---|---|---|
| US 10964937 | B2 | 30-03-2021 | CN 109560262 A | | 02-04-2019 |
| | | | KR 20190035387 A | | 03-04-2019 |
| | | | US 2019097220 A1 | | 28-03-2019 |
| CN 115188938 | A | 14-10-2022 | NONE | | |
| US 2016164081 | A1 | 09-06-2016 | CN 103474666 A | | 25-12-2013 |
| | | | US 2016164081 A1 | | 09-06-2016 |
| | | | WO 2015010524 A1 | | 29-01-2015 |

EPO FORM P0459

For more details about this annex : see Official Journal of the European Patent Office, No. 12/82

**EP 4 379 852 A1**

**REFERENCES CITED IN THE DESCRIPTION**

**Patent documents cited in the description**

- KR 1020220163040